# FASCICULE DE BREVET EUROPEEN

(11) **EP 4 636 434 B1**
(45) Date de publication et mention de la délivrance du brevet: **02.12.2026**
(21) Numéro de dépôt: 25168483.3
(22) Date de dépôt: 04.04.2025
(51) Int. Cl.: G01S 7/41, G01S 13/06, G01S 13/58, G01S 13/72, G01S 13/86, G01S 13/88

(54) **PROCÉDÉ ET DISPOSITIF DE CLASSIFICATION POUR DÉTERMINER UNE CLASSE POUR AU MOINS UN OBJET DÉTECTÉ PAR UN RADAR**
VERFAHREN UND KLASSIFIZIERUNGSVORRICHTUNG ZUR BESTIMMUNG EINER KLASSE FÜR MINDESTENS EIN VON EINEM RADAR ERFASSTES OBJEKT.
METHOD AND CLASSIFICATION DEVICE FOR DETERMINING A CLASS FOR AT LEAST ONE OBJECT DETECTED BY A RADAR.

(30) Priorité: 15.04.2024 FR 2403677
(43) Date de publication de la demande: 22.10.2025
(73) Titulaire: MBDA France, 92350 Le Plessis-Robinson (FR)
(72) Inventeur: LE ROCH, Maxime, 92350 LE PLESSIS-ROBINSON (FR); KOTENKOFF, Alexandre, 92350 LE PLESSIS-ROBINSON (FR); LEWONCZUK, Louise, 92350 Le PLESSIS-ROBINSON (FR); CORDROCH, Stefan, 92350 LE PLESSIS-ROBINSON (FR); PEREL, Christophe, 92350 LE PLESSIS-ROBINSON (FR); LE LOUET, Florian, 92350 LE PLESSIS-ROBINSON (FR); JEAUNEAU, Vincent, 92350 LE PLESSIS-ROBINSON (FR)
(74) Mandataire: Gevers & Orès

(56) Documents cités:
- MESSINA MARCO ET AL: "Classification of Drones with a Surveillance Radar Signal", 23 November 2019, 20191123, PAGE(S) 723 - 733, XP047528538
- JIANGKUN GONG ET AL: "Introduction to Drone Detection Radar with Emphasis on Automatic Target Recognition (ATR) technology", ARXIV.ORG, CORNELL UNIVERSITY LIBRARY, 201 OLIN LIBRARY CORNELL UNIVERSITY ITHACA, NY 14853, 19 July 2023 (2023-07-19), XP091568622
- DOUMARD TIMOTHEE ET AL: "Radar Discrimination of Small Airborne Targets Through Kinematic Features and Machine Learning", 2022 IEEE/AIAA 41ST DIGITAL AVIONICS SYSTEMS CONFERENCE (DASC), IEEE, 18 September 2022 (2022-09-18), pages 1 - 10, XP034217500, DOI: 10.1109/DASC55683.2022.9925778

## Description

### Domaine technique

La présente invention concerne un procédé et un dispositif de classification pour déterminer une classe pour au moins un objet détecté par un radar.

### Etat de la technique

Dans de nombreux domaines impliquant la détection d'objets, il est bien souvent très important de pouvoir identifier les objets détectés. En effet, dans des domaines tels que la défense, et plus particulièrement la défense antiaérienne, il est nécessaire d'avoir une vision claire et précise de l'espace et des objets qui s'y trouvent à tout instant pour pouvoir prendre des décisions. C'est notamment le cas lorsqu'il s'agit de surveiller des cibles très mobiles et/ou rapides telles que des drones ou des aéronefs, qu'il faut identifier rapidement afin de pouvoir traiter une potentielle menace.

Pour ce faire, une surveillance de l'espace en temps réel est réalisée, généralement par une pluralité de senseurs tels que des radars, des caméras et/ou des goniomètres. Par exemple, un radar peut détecter des objets au cours du temps sous la forme de plusieurs « plots » formants une « piste », à savoir une portion de la trajectoire d'un objet. Des méthodes de traitement des données relatives aux pistes des objets ainsi détectés peuvent ensuite être utilisées pour attribuer une classification à chacun desdits objets. Par exemple, certains systèmes de radar sont capables de détecter plusieurs objets, de différencier les pistes associées à chacun de ces objets et de reconnaître parmi ces pistes, celles qui correspondent à un drone, un aéronef etc.

Par exemple, on connaît par les documents suivants des procédés usuels de reconnaissance d'objets volants à l'aide de radar :
- Messina Marco et al : "Classification of Drones with a Surveillance Radar Signal", du 23 novembre 2019 ;
- Jiangkun Gong et al: "Introduction to Drone Detection Radar with Emphasis on Automatic Target Recognition (ATR) technology", ARXIV.ORG, CORNELL UNIVERSITY LIBRARY, 201 OLIN LIBRARY CORNELL UNIVERSITY ITHACA, NY 14853, du 19 juillet 2023; et
- Doumard Timothee et al : "Radar Discrimination of Small Airborne Targets Through Kinematic Features and Machine Learning", 2022 IEEE/AIAA 41ST DIGITAL AVIONICS SYSTEMS CONFERENCE (DASC), IEEE du 18 septembre 2022.

Toutefois, les solutions existantes ne sont pas suffisamment performantes pour obtenir une identification (aussi appelée classification) fiable et rapide permettant une réaction adaptée. En effet, les méthodes de classification usuelles prennent généralement plusieurs secondes, voire dizaines de secondes, pour reconnaître un objet. De plus, elles souffrent d'un manque d'efficacité pour certains types d'objets, en particulier pour des objets de tailles réduites tels que des micro-drones. Ainsi, les chaînes de surveillance connues génèrent un grand nombre de fausses alarmes car elles ne sont généralement pas capables de différencier de manière fiable certains objets, par exemple de faire la différence entre un drone et un oiseau. Ceci est particulièrement vrai dans le cadre de la surveillance pour des formations en essaims (« swarming » en anglais) pouvant comporter un grand nombre de drones et pour lesquelles une forte réactivité est nécessaire.

Par ailleurs, les fabricants de systèmes radar cherchent généralement à garder secret leur savoir-faire, ce qui les conduit à verrouiller l'accès à leurs systèmes. Par conséquent, il n'est pas possible d'avoir la maîtrise sur le fonctionnement de ces systèmes, ni sur leur évolution (leur mise à jour se fait uniquement par le fabricant).

Ainsi, les solutions existantes en matière de surveillance et d'identification d'objets ne permettent pas de répondre de façon satisfaisante aux besoins créés par l'évolution et la miniaturisation des technologies, notamment en ce qui concerne les drones. Des solutions plus performantes sont donc nécessaires.

### Exposé de l'invention

La présente invention a pour objet de remédier aux inconvénients précités. Elle concerne un procédé de classification, mis en œuvre par un dispositif de classification, pour déterminer une classe pour au moins un objet détecté par un radar destiné à fournir des données relatives audit ou auxdits objets détectés.

Selon l'invention, le procédé comprend au moins la suite d'étapes successives suivante mise en œuvre de façon itérative, chaque itération correspondant à la réception de nouvelles données fournies par le radar :
- une étape de réception, mise en œuvre par l'unité de réception, pour recevoir des données comprenant au moins des pistes caractérisant des portions de trajectoires des objets détectés par le radar et une première classification pour lesdites pistes, une classification comprenant des probabilités qu'une piste appartienne à une classe pour chacune des pistes et pour chacune des classes parmi une liste de classes prédéterminées ;
- une étape de traitement de données, mise en œuvre par un calculateur, pour filtrer les données reçues à l'étape de réception en supprimant les données correspondant à des pistes en double et/ou à des pistes corrompues de sorte qu'une seule piste soit associée à chacun des objets détectés par le radar ;

- une première étape de calcul, mise en œuvre par le calculateur, pour calculer, à partir des données filtrées, des caractéristiques cinématiques relatives à chacune des pistes ;
- une deuxième étape de calcul, mise en œuvre par le calculateur, pour calculer des éléments statistiques représentant des distributions statistiques des caractéristiques cinématiques relatives à chacune des pistes ;
- une étape de classification, mise en œuvre par le calculateur, comprenant au moins les sous-étapes suivantes mises en œuvre simultanément et pour chacune des pistes :
   - une première sous-étape de classification utilisant un algorithme statistique pour déterminer une deuxième classification à partir des éléments statistiques, ledit algorithme statistique étant basé sur des distributions statistiques de référence préalablement enregistrées dans une base de données ;
   - une seconde sous-étape de classification utilisant un algorithme de reconnaissance pour déterminer une troisième classification, ledit algorithme de reconnaissance étant préalablement entraîné par apprentissage automatique pour reconnaître des pistes correspondant à des classes prédéterminées ;

   - une étape de classification finale, mise en œuvre par le calculateur, pour déterminer une classification finale pour chacune des pistes à partir de la première classification, de la deuxième classification et de la troisième classification et pour attribuer à chacune des pistes une classe finale correspondant à la classe la plus probable pour la piste considérée selon sa classification finale ; et
   - une étape de transmission, mise en œuvre par une unité de transmission, pour transmettre à un système utilisateur au moins chacune des pistes et la classe finale qui lui est attribuée, la classe finale attribuée à une piste correspondant à la classe déterminée pour l'objet associé à cette piste.

Ainsi, grâce à l'invention, on est en mesure d'obtenir très rapidement une classification fiable permettant d'attribuer une classe finale aux objets détectés par le radar. En effet, l'association de plusieurs méthodes de classification permet d'obtenir la classification finale d'une piste dès la transmission des premières données relatives à cette piste par le radar. De plus, l'utilisation de différentes méthodes de classification permet également d'améliorer les performances de la classification. Cela permet, notamment, d'identifier de manière plus fiable des objets difficilement identifiables par des méthodes usuelles et de réduire le nombre de fausses alarmes.

Dans un mode de réalisation particulier, l'étape de classification finale comprend la suite de sous-étapes successives suivante mise en œuvre de façon itérative pour chacune des pistes jusqu'à ce qu'une classe finale soit attribuée à chacune des pistes :
- une sous-étape de détermination pour déterminer la probabilité que la piste considérée appartienne à une classe parmi les classes prédéterminées à partir de la première classification, de la deuxième classification et de la troisième classification ;
- une sous-étape de comparaison pour comparer la probabilité que la piste considérée appartienne à ladite classe considérée à une valeur seuil prédéterminée ; et
- une sous étape de validation pour :
   - attribuer la classe considérée comme classe finale à la piste considérée si la probabilité que ladite piste considérée appartienne à ladite classe considérée est supérieure ou égale à la valeur seuil ; et
   - sinon, passer à une autre classes prédéterminées parmi la liste des classes prédéterminées.

Avantageusement, la probabilité qu'une piste appartienne à une classe parmi les classes prédéterminées est déterminée en utilisant la formule suivante : ${P}_{f} = \frac{{w}_{1} . {P}_{1} + {w}_{2} . {P}_{2} + {w}_{3} . {P}_{3}}{{w}_{1} + {w}_{2} + {w}_{3}}$ dans laquelle :
- *P_{f}* est la probabilité qu'une piste appartienne à la classe considérée ;
- *w*₁ est un facteur de pondération associé à la première classification ;
- *P*₁ est la probabilité qu'une piste appartienne à la classe considérée selon la première classification ;
- *w*₂ est un facteur de pondération associé à la deuxième classification ;
- *P*₂ est la probabilité qu'une piste appartienne à la classe considérée selon la deuxième classification ;
- *w*₃ est un facteur de pondération associé à la troisième classification ;
- *P*₃ est la probabilité qu'une piste appartienne à la classe considérée selon la troisième classification.

De plus, avantageusement, la première classification, la deuxième classification, la troisième classification et la classification finale comprennent les probabilités, pour chacune des pistes, que ladite piste appartienne à chacune des classes prédéterminées suivantes : une classe « drone », une classe « hélicoptère », une classe « aéronef léger », une classe « aéronef de combat », une classe « missile », une classe « avion de ligne ».

Par ailleurs, de façon avantageuse, à chaque itération, à la fin de l'étape de classification finale, les classes finales attribuées à chacune des pistes sont enregistrées dans une mémoire, si la classe finale d'une piste enregistrée dans ladite mémoire reste inchangée pendant un nombre prédéterminée d'itérations consécutives, alors la classe finale de cette piste est figée dans la mémoire et aucune nouvelle classification n'est déterminée pour cette piste lors des itérations suivantes.

Dans un mode de réalisation particulier, le procédé comprend une étape préliminaire, mise en œuvre par une unité de calcul avant l'étape de réception, pour regrouper les données fournies par le radar pendant une période de temps prédéterminée sous la forme de paquets de données et pour transmettre lesdits paquets de données à l'étape de réception.

Avantageusement, les caractéristiques cinématiques calculées à la première étape de calcul comprennent au moins les caractéristiques suivantes : une accélération verticale, une accélération au sol, une surface équivalente radar, une vitesse au sol, une altitude, des écarts type sur la position, des écarts type sur la vitesse.

De plus, avantageusement, à la seconde étape de calcul, les éléments statistiques sont calculés sur deux fenêtres temporelles distinctes, une première fenêtre temporelle présentant une première durée dite durée à court terme, et une seconde fenêtre temporelle présentant une seconde durée dite durée à long terme, ladite durée à court terme étant plus petite que la durée à long terme.

En outre, de façon avantageuse, les éléments statistiques calculés à la seconde étape de calcul comprennent au moins les éléments suivants relatifs à au moins une des caractéristiques cinématiques : des valeurs minimales, des valeurs maximales, des moyennes, des médianes, des écarts type, des asymétries, des coefficients d'aplatissement, des écarts interquartiles.

La présente invention concerne également un dispositif de classification pour déterminer une classe pour au moins un objet détecté par un radar destiné à fournir des données relatives audit ou auxdits objets détectés.

Selon l'invention, le dispositif comporte au moins :
- une unité de réception configurée pour recevoir des données comprenant au moins des pistes caractérisant des portions de trajectoires des objets détectés par le radar et une première classification déterminée par le radar pour chacune des pistes, une classification comprenant des probabilités qu'une piste appartienne à une classe pour chacune des pistes et pour chacune des classes parmi une liste de classes prédéterminées ;
- un calculateur configuré pour :
   - filtrer les données reçues par l'unité de réception en supprimant les données correspondant à des pistes en double ou à des pistes corrompues de sorte qu'une seule piste soit associée à chacun des objets ;
   - calculer, à partir des données filtrées, des caractéristiques cinématiques de chacune des pistes ;
   - calculer des éléments statistiques représentant la distribution des caractéristiques cinématiques relatives à chacune des pistes ;
   - déterminer une deuxième classification à partir des éléments statistiques en utilisant un algorithme statistique basé sur des distributions statistiques de référence préalablement enregistrées dans une base de données ;
   - déterminer une troisième classification en utilisant un algorithme de reconnaissance préalablement entraîné par apprentissage automatique pour reconnaître des pistes correspondant à des classes prédéterminées ; et
   - déterminer une classification finale pour chacune des pistes à partir de la première classification, de la deuxième classification et de la troisième classification ; et
   - attribuer à chacune des pistes une classe finale correspondant à la classe la plus probable pour la piste considérée selon sa classification finale, et
- une unité de transmission configurée pour transmettre à un système utilisateur au moins chacune des pistes et la classe qui lui est attribuée, la classe finale attribuée à une piste correspondant à la classe déterminée pour l'objet associé à cette piste.

Dans un mode de réalisation particulier, le dispositif comporte une unité de calcul configurée pour regrouper les données fournies par le radar pendant une période de temps prédéterminée sous la forme de paquets de données et pour transmettre lesdits paquets de données à l'unité de réception.

### Brève description des figures

Les figures annexées feront bien comprendre comment l'invention peut être réalisée. Sur ces figures, des références identiques désignent des éléments semblables.
La figure 1 représente schématiquement un mode de réalisation particulier d'un dispositif de classification utilisant des données fournies par un radar.
La figure 2 représente un exemple d'utilisation d'un dispositif de classification pour discriminer des pistes appartenant à une classe particulière.
La figure 3 représente schématiquement un mode de réalisation particulier d'un procédé de classification.
La figure 4 représente schématiquement une mode de réalisation particulier d'un système de classification.

### Description détaillée

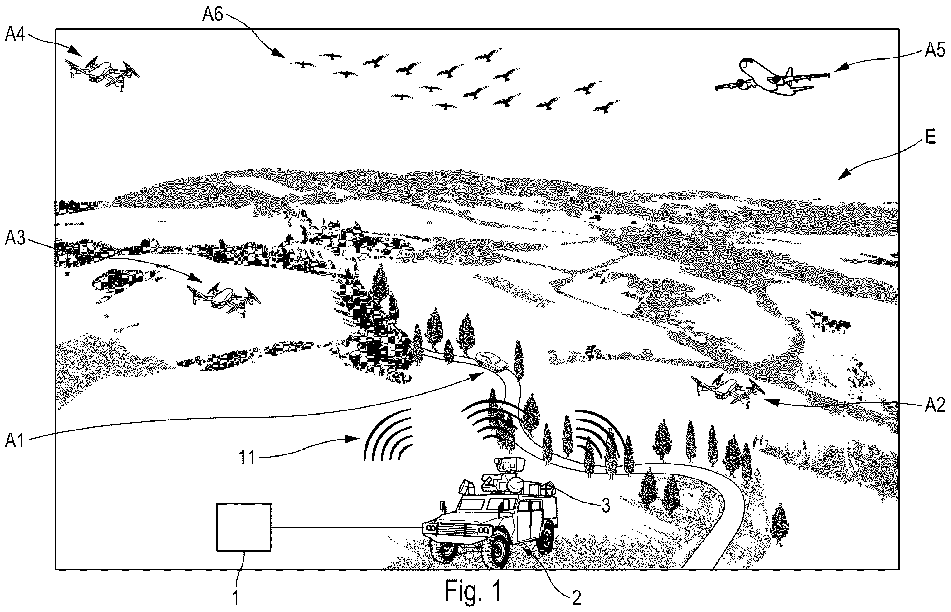

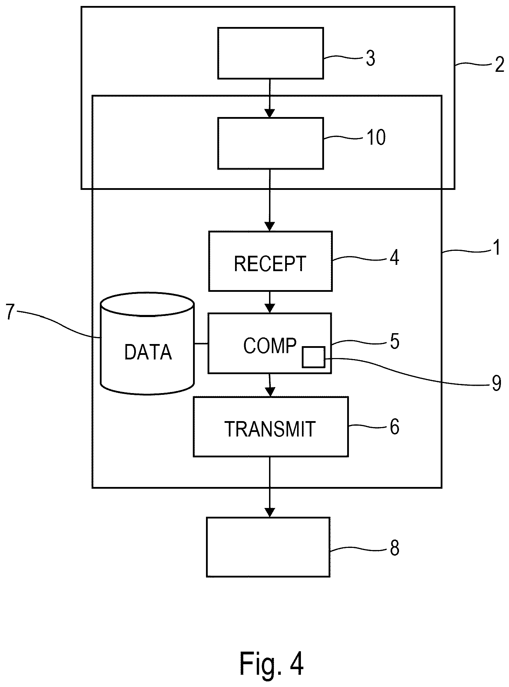

Un dispositif de classification 1 (ci-après dispositif 1) permettant d'illustrer l'invention est représenté schématiquement dans des modes de réalisation particuliers sur la figure 1 et la figure 4. Le dispositif 1 est destiné à fonctionner à partir de données fournies par un système de surveillance 2 comportant au moins un radar 3 apte à détecter des objets. Le rôle du dispositif 1 est d'identifier les objets détectés par le système de surveillance 2, c'est-à-dire de déterminer et d'attribuer une classe à chacun desdits objets, comme détaillé ci-après.

Dans le cadre de la présente invention, on entend par « objet » tout élément se déplaçant dans l'environnement. Il peut s'agir d'éléments évoluant dans les airs, sur la terre ou sur l'eau. De préférence, la présente invention concerne l'identification d'objets volants. Par « identification », on entend le fait de reconnaître un objet et plus précisément de reconnaître l'appartenance d'un objet à une classe parmi un ensemble de classes prédéterminées. Ainsi, l'identification ou la classification (les deux termes sont considérés équivalents) d'un objet désigne la détermination d'une classe à laquelle l'objet est susceptible d'appartenir et l'attribution de cette classe audit objet. Dans le cadre de la présente invention, la classe à laquelle un objet est susceptible d'appartenir correspond à la classe la plus probable pour cet objet, comme expliqué plus en détail ci-après.

La notion de « classification » associée à un objet désigne donc un ensemble d'informations qui sont destinées à être associées audit objet. Ces informations comprennent, notamment, pour un certain nombre de classes prédéterminées, la probabilité que l'objet appartiennent à l'une ou l'autre desdites classes prédéterminées. Pour un même objet détecté, il existe plusieurs méthodes de classification qui ne donneront pas nécessairement la même classification. Par conséquent, plusieurs classifications différentes peuvent être attribuées à un même objet.

L'objectif du dispositif 1 est de permettre de discriminer de manière fiable certains objets particuliers parmi l'ensemble des objets détectés par le système de surveillance 2. Bien que non exclusivement, le dispositif 1 est particulièrement adapté pour identifier des drones, notamment des drones de taille réduite tels que des mini-drones ou des micro-drones. Le dispositif 1 est également adapté pour identifier d'autres objets de formes et de tailles variées tels que des engins volants (aéronef, missile, ...), des engins terrestres (voiture, camion, ...) ou des engins maritimes (navire, ... ).

Dans le mode de réalisation particulier représenté sur la figure 1, le système de surveillance 2 correspond à un système embarqué sur un véhicule comportant une pluralité de senseurs (radars, caméras, goniomètres ...) dont le radar 3. Le système de surveillance 2 est positionné dans un environnement E à surveiller correspondant aux alentours du système de surveillance 2. La portée du radar 3 définit la taille dudit environnement E, par exemple plusieurs kilomètres ou dizaines de kilomètres autour du système de surveillance 2.

Le radar 3 détecte des objets (A1, A2, ..., A6) dans ledit environnement E au cours du temps. Dans l'exemple illustré sur la figure 1, on a représenté seulement six objets A1 à A6, toutefois le radar 3 est capable de détecter un grand nombre d'objets, par exemple plusieurs dizaines d'objets. Le radar 3 fournit des données relatives à ces objets au dispositif 1 pour qu'il puisse les identifier.

Comme représenté schématiquement sur la figure 1, le radar 3 correspond à un radar usuel utilisant des ondes électromagnétiques 11 pour détecter des données relatives à la présence et à la cinématique d'objets dans l'environnement. Par exemple, il peut s'agir d'un radar à antenne active (ou radar ASEA pour « Active Electronically Scanned Array » en anglais).

De plus, le radar 3 comprend une unité de traitement de données intégrée pour réaliser des opérations sur les données relatives aux objets détectés. Ainsi, le radar 3 mesure des « plots » représentant les positions d'un objet au cours du temps. À partir de ces « plots », le radar 3 est en mesure de déterminer au moins une piste pour chacun des objets détectés. La ou les pistes d'un objet correspondent à une portion de trajectoire de cet objet. En regroupant les pistes consécutives déterminées pour un même objet au cours du temps, on peut obtenir la trajectoire dudit objet.

En outre, le radar 3 détermine également une première classification pour chacune des pistes déterminées. Le terme « classification » désigne un ensemble de données représentant les probabilités, pour une liste de classes prédéterminées, qu'un objet appartienne à l'une ou l'autre desdites classes. Les classes prédéterminées sont choisies préalablement et correspondent aux catégories (ou types) d'objets que l'on souhaite différencier. La première classification définit donc, pour chacune des pistes déterminées par le radar 3 et pour chacune des classes prédéterminées, la probabilité que l'objet associé à ladite piste appartienne à ladite classe.

Dans le cadre de la présente description, pour simplifier la rédaction, on considère que dire d'une piste qu'elle appartient à une classe est équivalent à dire que l'objet associé à cette piste appartient à ladite classe.

À titre d'illustration, on a représenté sur la figure 1 les objets A1 à A6 correspondant à une partie des objets détectés par le radar 3. Il s'agit d'un échantillon non exhaustif des types d'objets susceptibles d'être détectés par le radar 3. L'objet A1 est une voiture se déplaçant sur une route. Les objets A2, A3 et A4 sont des drones se déplaçant dans les airs. L'objet A5 est un avion de ligne survolant le secteur. L'objets A6 est un oiseau se déplaçant dans le ciel. Sur la figure 1, les objets A1 à A6 sont représentés de façon schématique et ils ne sont pas à l'échelle réelle.

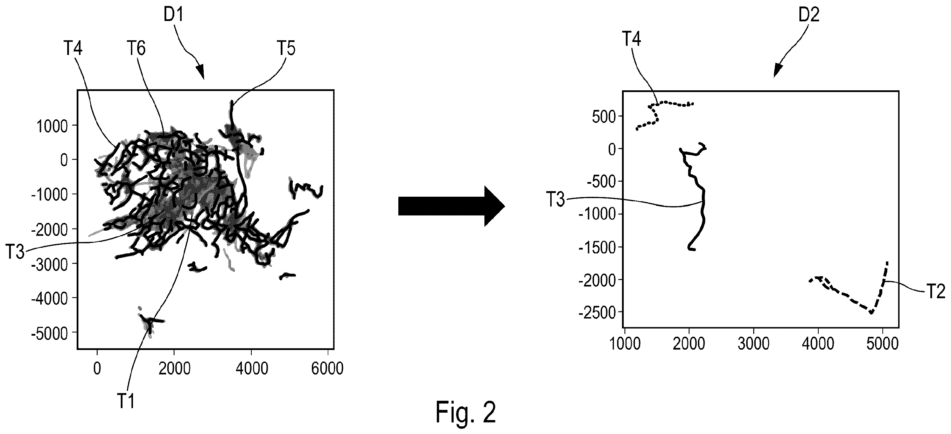

En outre, on a représenté sur la figure 2 un exemple d'affichage D1 (à gauche sur la figure 2) montrant l'ensemble des pistes déterminées pour les objets détectés sur une période de temps donnée. Parmi ces pistes, on retrouve des pistes T1 à T6 déterminées, respectivement, pour les objets A1 à A6.

Une première classification est déterminée par le radar 3 pour l'ensemble des pistes détectées. À titre d'exemple non limitatif, la première classification comprend les probabilités que chacune des pistes appartienne à l'une des classes prédéterminés suivantes intitulées : « drone », « hélicoptère », « aéronef léger », « aéronef de combat », « missile », « avion de ligne ». La liste des classes prédéterminées peut également comprendre une classe intitulée « autre ». pour les objets qui n'entrent dans aucune de ces classes. Dans des variantes, la liste de classes prédéterminées peut comprendre d'autres classes selon les besoins de l'application considérée.

Ainsi, le radar 3 est apte à fournir au dispositif 1 des données relatives aux objets détectés, notamment les pistes et la première classification, afin que le dispositif 1 détermine une classification plus fiable comme expliqué ci-dessous. Le dispositif 1 peut être embarqué avec le système de surveillance 2 ou déporté ailleurs comme représenté sur la figure 1.

Dans le mode de réalisation particulier représenté sur la figure 4, le dispositif 1 comporte une unité de réception 4 (notée « RECEPT » sur la figure 4 pour « reception unit » en anglais) permettant de recevoir les données provenant du radar 3. Ces données comprennent notamment les pistes et la première classification déterminées par le radar 3.

Dans un mode de réalisation particulier, le dispositif 1 comprend une unité de calcul 10 pouvant être embarquée dans le système de surveillance 2 configurée pour grouper sous la forme de paquets de données l'ensemble des données fournies par le radar 3. Ces paquets de données correspondent aux pistes et à la première classification déterminée par le radar 3 sur une période de temps prédéterminée, par exemple sur une période de 100 ms. L'unité de réception 4 est configurée pour recevoir les paquets de données ainsi formés à intervalles de temps réguliers, ce qui permet un traitement rapide des données. En effet, il est plus rapide de traiter parallèlement toutes les pistes en une seule fois plutôt que les unes après les autres.

De plus, le dispositif 1 comporte un calculateur 5 (noté « COMP » sur la figure 4 pour « computer » en anglais) permettant de traiter les données reçues par l'unité de réception 4. Ce traitement de données comprend, notamment, la détermination d'une classification finale pour l'ensemble des pistes fournies par le radar 3, comme détaillé ci-dessous. De manière non limitative, le calculateur 5 peut correspondre à un dispositif électronique usuel comprenant un ou plusieurs processeurs.

Le calculateur 5 est configuré pour filtrer les données reçues par l'unité de réception 4. En particulier, il réalise la suppression des données correspondant à des pistes en double et/ou à des pistes corrompues. En effet, il est possible que certaines données fournies par le radar 3 soient incohérentes. Par exemple plusieurs pistes peuvent comprendre des données identiques ou certaines pistes peuvent comprendre des valeurs erronées et/ou manquantes. Dans ce cas, le calculateur 5 est apte à reconnaître de manière usuelle ce type de données redondantes et/ou incohérentes, et, le cas échéant, à les effacer. De cette manière on conserve uniquement les données pertinentes, à savoir des données comprenant une seule piste cohérente pour chaque objet détecté.

Le calculateur 5 est également configuré pour calculer des caractéristiques cinématiques relatives à chacune des pistes. Il s'agit de données caractérisant la cinématique des objets associés à chacune des pistes. De manière non exhaustive, les caractéristiques cinématiques calculées par le calculateur 5 peuvent comprendre les caractéristiques suivantes : une accélération verticale, une accélération au sol, une surface équivalente radar (aussi appelée SER), une vitesse au sol, une altitude, des écarts-types sur la position, des écarts-types sur la vitesse.

De plus, le calculateur 5 est configuré pour calculer, à partir des caractéristiques cinématiques, des éléments statistiques pour chacune des pistes. Les éléments statistiques correspondent à des grandeurs représentant la distribution des caractéristiques cinématiques de chacune des pistes. De manière non exhaustive, les éléments statistiques calculés par le calculateur 5 peuvent comprendre les éléments suivants relatifs à au moins une des caractéristiques cinématique : des valeurs minimales d'au moins une des caractéristiques cinématiques, des valeurs maximales d'au moins une des caractéristiques cinématiques, des moyennes d'au moins une des caractéristiques cinématiques, des valeurs médianes d'au moins une des caractéristiques cinématiques, des valeurs d'écarts type d'au moins une des caractéristiques cinématiques, des valeurs d'asymétries d'au moins une des caractéristiques cinématiques, des coefficients d'aplatissement d'au moins une des caractéristiques cinématiques, des valeurs d'écarts interquartiles d'au moins une des caractéristiques cinématiques.

De plus, les éléments statistiques sont calculés sur deux fenêtres temporelles distinctes, à savoir sur une première fenêtre temporelle présentant une première durée dite durée à court terme, et sur une seconde fenêtre temporelle présentant une seconde durée dite durée à long terme. La durée à court terme correspond à une durée prédéterminée qui est est plus petite que la durée à long terme qui est également prédéterminée. De cette manière, on dispose d'éléments statistiques permettant de représenter le comportement immédiat (ou récent) de l'objet associé et des éléments statistiques permettant de représenter le comportement dudit objet sur une période de temps plus large.

En outre, le calculateur 5 est configuré pour déterminer une deuxième classification et une troisième classification pour chacune des pistes. Les deuxième et troisième classifications correspondent à deux classifications indépendantes. Elles sont également indépendantes de la première classification. Toutefois, comme la première classification, elles définissent toutes les deux les probabilités, pour chacune des pistes et pour chacune des classes prédéterminées, que ladite piste appartienne à ladite classe.

Les deuxième et troisième classifications diffèrent en ce qu'elles sont obtenues par des méthodes différentes. Ainsi, on est en mesure de robustifier l'identification des objets. Dans des variantes de réalisation, le calculateur 5 peut être configuré pour déterminer d'autres classifications supplémentaires à l'aide d'autres méthodes.

La deuxième classification est déterminée en utilisant un algorithme statistique basé sur des distributions statistiques de référence préalablement enregistrées dans une base de données 7 (notée DATA sur la figure 4) accessible par le calculateur 5. En effet, les objets associés aux pistes correspondant à une même classe ont tendance à avoir le même comportement en terme de distribution statistique sur les caractéristiques cinématiques. Ainsi, en identifiant préalablement ces comportements et en associant une distribution statistique de référence à chacune des classes que l'on souhaite reconnaître (à savoir les classes prédéterminées), on obtient une base de données de référence. Par comparaison entre les éléments statistiques calculés et les distributions statistiques de référence, on est capable de déterminer la probabilité qu'une piste appartienne à une classe associée à une distribution statistique de référence particulière.

La troisième classification est déterminée en utilisant un algorithme de reconnaissance, préalablement entraîné par apprentissage automatique ou apprentissage supervisé, pour reconnaître des pistes correspondant à des classes prédéterminées. L'algorithme de reconnaissance repose sur un modèle d'intelligence artificielle entraîné par un opérateur spécialiste dans le domaine considéré sur des ensembles aléatoires de données comprenant des pistes issues d'objets connus (comme des drones). Les pistes sont étiquetées par l'opérateur pour indiquer à l'intelligence artificielle à quel objet elle correspond (un drone, une fausse alarme ou un autre objet). Un outil d'association automatique par corrélation GPS peut notamment être utilisé pour associer des pistes connues et des classes prédéterminées correspondantes. Dans un mode de réalisation préféré, l'algorithme de reconnaissance est entraîné à l'aide d'un apprentissage par arbres de décisions.

De plus, le calculateur 5 est configuré pour déterminer une classification finale pour chacune des pistes à partir de la première classification, de la deuxième classification et de la troisième classification. Il s'agit de réaliser une comparaison entre les résultats obtenus par chacune des classifications et de déterminer la probabilité qu'une piste appartienne à une classe en fonction de cette comparaison.

Le calculateur 5 est également configuré pour déterminer, à partir de la classification finale, une classe finale à attribuer à chacune des pistes. La classe finale d'une piste correspond à la classe la plus probable pour cette piste selon la classification finale.

Dans un mode de réalisation particulier, pour déterminer la classification finale, le calculateur 5 détermine, pour chacune des pistes et pour chacune des classes prédéterminées, la probabilité que la piste considérée appartienne à la classe considérée, à partir de la première classification, de la deuxième classification et de la troisième classification. Le calculateur 5 compare ensuite cette probabilité à une valeur seuil prédéterminée. Des règles expertes peuvent être établies pour déterminer la valeur seuil pour chacune des classes prédéterminées, par exemple en s'appuyant sur des données connues.

Dans le cadre de la présente invention, on entend par « règle experte » une règle définie manuellement par un ensemble de personnes disposant d'une expertise sur les données et/ou le domaine considéré. Cette règle peut être établie en fixant des seuils de décision à partir des connaissances dites expertes (à savoir des connaissances des personnes disposant de l'expertise). Cette règle permet d'établir la classification d'une piste à l'aide des valeurs de certaines caractéristiques cinématiques.

Si ladite probabilité est supérieure ou égale à la valeur seuil, alors la classe considérée est attribuée comme classe finale à la piste considérée. On répète ensuite le même cheminement pour la piste suivante jusqu'à ce qu'une classe finale soit attribuée à toutes les pistes. Sinon, on répète le même cheminement pour la même piste mais avec une autre classe prédéterminée, jusqu'à ce qu'une classe finale soit attribuée à ladite piste.

Dans un mode de réalisation particulier, pour déterminer la classification finale, le calculateur 5 détermine la probabilité qu'une piste appartienne à une classe particulière parmi les classes prédéterminées en utilisant la formule suivante : ${P}_{f} = \frac{{w}_{1} . {P}_{1} + {w}_{2} . {P}_{2} + {w}_{3} . {P}_{3}}{{w}_{1} + {w}_{2} + {w}_{3}} ;$ dans laquelle :
- *P_{f}* est la probabilité qu'une piste appartienne à la classe considérée ;
- *w*₁ est un facteur de pondération associé à la première classification ;
- *P*₁ est la probabilité qu'une piste appartienne à la classe considérée selon la première classification ;
- *w*₂ est un facteur de pondération associé à la deuxième classification ;
- *P*₂ est la probabilité qu'une piste appartienne à la classe considérée selon la deuxième classification ;
- *w*₃ est un facteur de pondération associé à la troisième classification ;
- *P*₃ est la probabilité qu'une piste appartienne à la classe considérée selon la troisième classification.

Ainsi, on est en mesure de déterminer l'importance que l'on souhaite donner à chacune des classifications dans la détermination de la classification finale. Par exemple, lorsque l'on sait qu'une méthode de classification est plus performante qu'une autre pour l'identification d'une classe en particulier pour laquelle on souhaite reconnaître des objets, il est possible de donner plus de poids à la classification issue de cette méthode, en adaptant le facteur de pondération correspondant.

En outre, comme représenté sur la figure 4, le dispositif 1 comporte une unité de transmission 6 (notée « TRANSMIT » pour « transmission unit » en anglais) permettant de transmettre les données calculées par le calculateur 5 à un système utilisateur 6. Plus précisément, l'unité de transmission 6 est configurée pour transmettre chacune des pistes et la classe finale qui lui est attribuée. La classe finale attribuée à une piste correspond à la classe déterminée pour l'objet associé à cette piste.

Dans un exemple d'application représenté sur la figure 2, le système utilisateur 6 correspond à un système comportant un dispositif d'affichage permettant de visualiser les pistes transmises par le dispositif 1. Il permet notamment d'afficher uniquement les pistes correspondant à une classe souhaitée, par exemple les pistes correspondant à des drones. Un premier exemple d'affichage D1, représenté à gauche sur la figure 2, permet de visualiser l'ensemble des pistes déterminées par le radar 3. Un second exemple d'affichage D2, représenté à droite sur la figure 2 permet de visualiser uniquement les pistes pour lesquelles la classe « drone » a été attribuée par le dispositif 1. Dans l'exemple illustré par la figure 1 et la figure 2, il s'agit des pistes T2, T3 et T3 correspondant aux drones A2, A3 et A4.

Ainsi, grâce au dispositif 1 tel que décrit ci-dessus, on est en mesure d'obtenir très rapidement une classification fiable permettant d'attribuer une classe finale aux objets détectés par le radar 3. En effet, l'association de plusieurs méthodes de classification permet d'obtenir la classification finale d'une piste dès la transmission des premières données relatives à cette piste par le radar 3. De plus, le dispositif 1 permet une grande adaptabilité puisqu'il repose sur l'utilisation de caractéristiques génériques proposées par tous les senseurs usuels.

Par ailleurs, le dispositif 1 est configuré pour fonctionner de manière itérative. En effet, à intervalles de temps prédéterminés, par exemple toutes les 100 ms, le radar transmet des nouvelles données au dispositif 1. A chaque fois, le dispositif 1 filtre ces nouvelles données, détermine une classification finale pour toutes les nouvelles pistes et transmet lesdites pistes et ladite classification finale. Une classification des objets détectés par le radar 3 est donc réalisée par le dispositif 1 dès que les premières données relatives aux objets sont transmises par le radar 3, puis cette classification est renforcée dans le temps, au fur et à mesure que davantage de données sont transmises.

Dans un mode de réalisation particulier, les classes finales attribuées à chacune des pistes sont enregistrées dans une mémoire 9, par exemple une mémoire vive intégrée au calculateur 5. Si la classe finale d'une piste enregistrée dans la mémoire 9 reste inchangée pendant un nombre prédéterminée d'itérations consécutives, alors la classe finale de cette piste est figée dans la mémoire 9, c'est-à-dire qu'elle ne sera plus modifiée par la suite. Aucune nouvelle classification ne sera déterminée pour cette piste même si le radar 3 continue de transmettre des données relatives à celle-ci. En effet, si la classe finale d'une piste est stable durant un certain temps, on considère qu'elle est suffisamment fiable et qu'il n'est plus nécessaire de la déterminer à nouveau. Cela permet d'optimiser les ressources, notamment le temps de calcul du calculateur 5.

Dans un mode de réalisation particulier, l'unité de transmission 6 est configurée pour réaliser une action supplémentaire lorsque la classe finale attribuée à une piste correspond à une classe dite sensible. La classe sensible correspond à une classe déterminée par un opérateur en fonction de l'application considérée. Par exemple, il peut s'agir de la classe « drone » pour laquelle on souhaite générer une forme d'alerte lorsqu'un objet de cette classe est identifié par le dispositif 1. De manière non limitative, lorsqu'une classe sensible est attribuée à la piste associée à un nouvel objet détecté, il est possible d'envisager de générer une alerte pour un opérateur ou de transmettre ladite piste sous un format particulier afin d'attirer l'attention de l'opérateur sur la piste. Il peut également s'agir de proposer à un opérateur une ou plusieurs actions par défaut adaptées pour traiter l'objet en fonction de la classe sensible à laquelle il appartient.

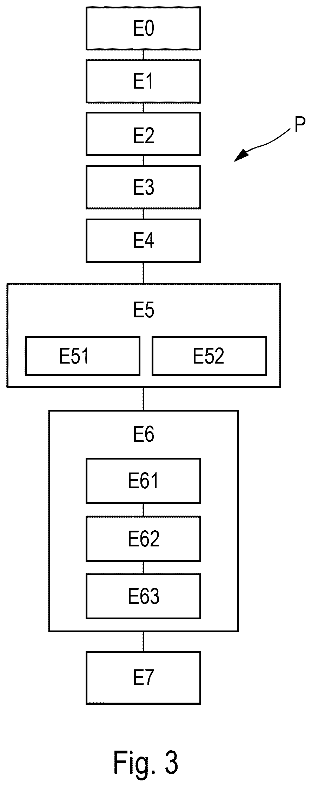

Le dispositif 1 tel que décrit ci-dessus permet de mettre en œuvre un procédé P de classification représenté schématiquement sur la figure 3. Le procédé P comprend une suite d'étapes successives E1, E2, E3, E4 et E5 pour déterminer la classification finale et attribuer une classe finale à chacune des pistes associées aux objets détectés par le radar 3.

L'étape E1 est une étape de réception pour recevoir des données comprenant les pistes et la première classification déterminée par le radar 3 pour chacune des pistes.

L'étape E2 est une étape de traitement de données pour filtrer les données reçues à l'étape E1 en supprimant les données correspondant à des pistes en doubles et/ou à des pistes corrompues de sorte qu'une seule piste soit associée à chacun des objets détectés par le radar 3.

L'étape E3 est une première étape de calcul pour calculer, à partir des données filtrées à l'étape E2, les caractéristiques cinématiques relatives à chacune des pistes.

L'étape E4 est une seconde étape de calcul pour calculer les éléments statistiques représentant la distribution des caractéristiques cinématiques relatives à chacune des pistes.

L'étape E5 est une étape de classification comprenant les sous-étape E51 et E52 mises en œuvre simultanément. La sous-étape E51 consiste à utiliser l'algorithme statistique pour déterminer la deuxième classification à partir des éléments statistiques calculés à l'étape E4. La sous-étape E52 consiste à utiliser l'algorithme de reconnaissance pour déterminer la troisième classification.

L'étape E6 est une étape de classification finale pour déterminer une classification finale pour chacune des pistes à partir de la première classification, de la deuxième classification et de la troisième classification. L'étape E6 consiste également à attribuer une classe finale à chacune des pistes, à savoir la classe la plus probable pour ladite piste.

L'étape E7 est une étape de transmission pour transmettre à un système utilisateur chacune des pistes et la classe finale qui lui est attribuée. La classe finale attribuée à une piste correspond à la classe déterminée pour l'objet associé à cette piste.

Dans un mode de réalisation particulier représenté sur la figure 3, l'étape E6 comprend des sous-étapes successives E61, E62 et E63 mises en œuvre pour chacune des pistes et pour chacune des classes prédéterminées. L'objectif de cette suite de sous-étapes est d'attribuer une classe finale à chacune des pistes tel que décrit ci-dessous.

La sous-étape E61 est une sous-étape de détermination pour déterminer la probabilité que la piste considérée appartienne à une classe considérée à partir de la première classification, de la deuxième classification et de la troisième classification.

La sous-étape E62 est une sous-étape de comparaison pour comparer la probabilité que la piste considérée appartienne à la classe considérée, à une valeur seuil prédéterminée.

La sous étape E63 est une étape de validation permettant d'attribuer ou non la classe considérée à la piste considérée.

Si la probabilité que la piste considérée appartienne à la classe considérée est supérieure ou égale à la valeur seuil, alors ladite classe est définie comme étant la classe finale et elle est attribuée à ladite piste. Dans ce cas, on passe à la piste suivante et la suite de sous-étapes E61, E62 et E63 est mise en œuvre pour cette nouvelle piste.

Sinon, la classe considérée n'est pas attribuée à la piste considérée et la suite de sous-étapes E61, E62 et E63 est de nouveau mise en œuvre pour la piste considérée avec une nouvelle classe parmi les classes prédéterminées.

La suite de sous-étape E61, E62, E63 est mise en œuvre de façon répétée jusqu'à ce qu'une classe finale soit attribuée à chacune des pistes.

Par ailleurs, dans un mode de réalisation particulier représenté sur la figure 4, le procédé P comprend une étape E0 mise en œuvre avant l'étape E1. L'étape E0 correspond à une étape préliminaire pour regrouper les données fournies par le radar 3 pendant une période de temps prédéterminée sous la forme de paquets de données et pour transmettre lesdits paquets de données à l'étape E1.

Le dispositif 1 de classification tel que décrit ci-dessus présente de nombreux avantages. En particulier :
- il permet d'attribuer de manière fiable et rapide une classe finale à chacune des pistes associées aux objets détectés par le radar 3 ;
- il permet de réaliser ladite attribution de classe finale dès les premières données d'une piste fournie pour le radar 3 ;
- il permet d'obtenir une classification particulièrement fiable et robuste grâce à la mise en œuvre conjointe de plusieurs méthodes de classifications qui peuvent être complémentaires ;
- il permet d'identifier des objets difficilement identifiables par des méthodes usuels tels que des drones et ainsi d'augmenter significativement les performances de la classification, notamment en réduisant grandement le nombre de fausses alarmes ; et
- il peut être adapté à une grande variété de senseurs car il repose sur l'utilisation de caractéristiques génériques communes aux senseurs usuels.

## Revendications

1. Procédé de classification, mis en œuvre par un dispositif de classification (1), pour déterminer une classe pour au moins un objet détecté par un radar (3) destiné à fournir des données relatives audit ou auxdits objets détectés, comportant au moins la suite d'étapes successives suivante mise en œuvre de façon itérative, chaque itération correspondant à la réception de nouvelles données fournies par le radar (3) :
- une étape (E1) de réception, mise en œuvre par une unité de réception (4), pour recevoir des données comprenant au moins des pistes caractérisant des portions de trajectoires des objets détectés par le radar (3) et une première classification pour lesdites pistes, une classification comprenant des probabilités qu'une piste appartienne à une classe pour chacune des pistes et pour chacune des classes parmi une liste de classes prédéterminées ;
- une étape (E2) de traitement de données, mise en œuvre par un calculateur (5), pour filtrer les données reçues à l'étape (E1) de réception en supprimant les données correspondant à des pistes en double et/ou à des pistes corrompues de sorte qu'une seule piste soit associée à chacun des objets détectés par le radar (3) ;
- une première étape (E3) de calcul, mise en œuvre par le calculateur (5), pour calculer, à partir des données filtrées, des caractéristiques cinématiques relatives à chacune des pistes ;
- une seconde étape (E4) de calcul, mise en œuvre par le calculateur (5), pour calculer des éléments statistiques représentant des distributions statistiques des caractéristiques cinématiques relatives à chacune des pistes ;
- une étape (E5) de classification, mise en œuvre par le calculateur (5), comprenant au moins les sous-étapes suivantes mises en œuvre simultanément et pour chacune des pistes :
• une première sous-étape (E51) de classification utilisant un algorithme statistique pour déterminer une deuxième classification à partir des éléments statistiques, ledit algorithme statistique étant basé sur des distributions statistiques de référence préalablement enregistrées dans une base de données ;
• une seconde sous-étape (E52) de classification utilisant un algorithme de reconnaissance pour déterminer une troisième classification, ledit algorithme de reconnaissance étant préalablement entraîné par apprentissage automatique pour reconnaître des pistes correspondant à des classes prédéterminées ;
- une étape (E6) de classification finale, mise en œuvre par le calculateur (5), pour déterminer une classification finale pour chacune des pistes à partir de la première classification, de la deuxième classification et de la troisième classification et pour attribuer à chacune des pistes une classe finale correspondant à la classe la plus probable pour la piste considérée selon sa classification finale ; et
- une étape (E7) de transmission, mise en œuvre par une unité de transmission (6), pour transmettre à un système utilisateur (7) au moins chacune des pistes et la classe finale qui lui est attribuée, la classe finale attribuée à une piste correspondant à la classe déterminée pour l'objet associé à cette piste.

2. Procédé selon la revendication 1,
**caractérisé en ce que** l'étape (E6) de classification finale comprend la suite de sous-étapes successives suivante mise en œuvre de façon itérative pour chacune des pistes jusqu'à ce qu'une classe finale soit attribuée à chacune des pistes :
- une sous-étape (E61) de détermination pour déterminer la probabilité que la piste considérée appartienne à une classe parmi les classes prédéterminées à partir de la première classification, de la deuxième classification et de la troisième classification ;
- une sous-étape (E62) de comparaison pour comparer la probabilité que la piste considérée appartienne à ladite classe considérée à une valeur seuil prédéterminée ; et
- une sous étape (E63) de validation pour :
• attribuer la classe considérée comme classe finale à la piste considérée si la probabilité que ladite piste considérée appartienne à ladite classe considérée est supérieure ou égale à la valeur seuil ; et
• sinon, passer à une autre classe prédéterminée parmi la liste des classes prédéterminées.

3. Procédé selon l'une des revendications 1 et 2, **caractérisé en ce que** la probabilité qu'une piste appartienne à une classe parmi les classes prédéterminées est déterminée en utilisant la formule suivante : ${P}_{f} = \frac{{w}_{1} . {P}_{1} + {w}_{2} . {P}_{2} + {w}_{3} . {P}_{3}}{{w}_{1} + {w}_{2} + {w}_{3}}$ dans laquelle :
- *P_{f}* est la probabilité qu'une piste appartienne à la classe considérée ;
- *w*₁ est un facteur de pondération associé à la première classification ;
- *P*₁ est la probabilité qu'une piste appartienne à la classe considérée selon la première classification ;
- *w*₂ est un facteur de pondération associé à la deuxième classification ;
- *P*₂ est la probabilité qu'une piste appartienne à la classe considérée selon la deuxième classification ;
- *w*₃ est un facteur de pondération associé à la troisième classification ;
- *P*₃ est la probabilité qu'une piste appartienne à la classe considérée selon la troisième classification.

4. Procédé selon l'une quelconque des revendications précédentes, **caractérisé en ce que** la première classification, la deuxième classification, la troisième classification et la classification finale d'une piste comprennent les probabilités que l'objet associé à ladite piste appartienne à chacune des classes prédéterminées suivantes : une classe « drone », une classe « hélicoptère », une classe « aéronef léger », une classe « aéronef de combat », une classe « missile », une classe « avion de ligne ».

5. Procédé selon l'une quelconque des revendications précédentes, **caractérisé en ce qu'**à chaque itération, à la fin de l'étape (E6) de classification finale, les classes finales attribuées à chacune des pistes sont enregistrées dans une mémoire (9), si la classe finale d'une piste enregistrée dans la mémoire (9) reste inchangée pendant un nombre prédéterminée d'itérations consécutives, alors la classe finale de cette piste est figée dans la mémoire (9) et aucune nouvelle classification n'est déterminée pour cette piste lors des itérations suivantes.

6. Procédé selon l'une quelconque des revendications précédentes, **caractérisé en ce qu'**il comprend une étape (E0) préliminaire, mise en œuvre par une unité de calcul (11) avant l'étape (E1) de réception, pour regrouper les données fournies par le radar (3) pendant une période de temps prédéterminée sous la forme de paquets de données et pour transmettre lesdits paquets de données à l'étape (E1) de réception.

7. Procédé selon l'une quelconque des revendications précédentes, **caractérisé en ce que** les caractéristiques cinématiques calculées à la première étape (E3) de calcul comprennent au moins les caractéristiques suivantes : une accélération verticale, une accélération au sol, une surface équivalente radar, une vitesse au sol, une altitude, des écarts type sur la position, des écarts type sur la vitesse.

8. Procédé selon l'une quelconque des revendications précédentes, **caractérisé en ce qu'**à la seconde étape (E4) de calcul, les éléments statistiques sont calculés sur deux fenêtres temporelles distinctes, une première fenêtre temporelle présentant une première durée dite durée à court terme, et une seconde fenêtre temporelle présentant une seconde durée dite durée à long terme, ladite durée à court terme étant plus petite que la durée à long terme.

9. Procédé selon l'une quelconque des revendications précédentes, **caractérisé en ce que** les éléments statistiques calculés à la seconde étape (E4) de calcul comprennent au moins les éléments suivants relatifs à au moins une des caractéristiques cinématiques : des valeurs minimales, des valeurs maximales, des moyennes, des médianes, des écarts type, des asymétries, des coefficients d'aplatissement, des écarts interquartiles.

10. Dispositif de classification pour déterminer une classe pour au moins un objet détecté par un radar (3) destiné à fournir des données relatives audit ou auxdits objets détectés,
ledit dispositif comportant au moins :
- une unité de réception (4) configurée pour recevoir des données comprenant au moins des pistes caractérisant des portions de trajectoires des objets détectés par le radar (3) et une première classification déterminée par le radar (3) pour chacune des pistes, une classification comprenant des probabilités qu'une piste appartienne à une classe pour chacune des pistes et pour chacune des classes parmi une liste de classes prédéterminées ;
- un calculateur (5) configuré pour :
• filtrer les données reçues par l'unité de réception (4) en supprimant les données correspondant à des pistes en double ou à des pistes corrompues de sorte qu'une seule piste soit associée à chacun des objets ;
• calculer, à partir des données filtrées, des caractéristiques cinématiques de chacune des pistes ;
• calculer des éléments statistiques représentant la distribution des caractéristiques cinématiques relatives à chacune des pistes ;
• déterminer une deuxième classification à partir des éléments statistiques en utilisant un algorithme statistique basé sur des distributions statistiques de référence préalablement enregistrées dans une base de données ;
• déterminer une troisième classification en utilisant un algorithme de reconnaissance préalablement entraîné par apprentissage automatique pour reconnaître des pistes correspondant à des classes prédéterminées ; et
• déterminer une classification finale pour chacune des pistes à partir de la première classification, de la deuxième classification et de la troisième classification ; et
• attribuer à chacune des pistes une classe finale correspondant à la classe la plus probable pour la piste considérée selon sa classification finale, et
- une unité de transmission (6) configurée pour transmettre à un système utilisateur (7) au moins chacune des pistes et la classe qui lui est attribuée, la classe finale attribuée à une piste correspondant à la classe déterminée pour l'objet associé à cette piste.

11. Dispositif selon la revendication 10,
**caractérisé en ce qu'**il comporte un unité de calcul (11) configurée pour regrouper les données fournies par le radar (3) pendant une période de temps prédéterminée sous la forme de paquets de données et pour transmettre lesdits paquets de données à l'unité de réception (4).

## Patentansprüche

1. Klassifizierungsverfahren, das von einer Klassifizierungsvorrichtung (1) durchgeführt wird, um eine Klasse für mindestens ein von einem Radar (3) erfasstes Objekt zu bestimmen, der dazu vorgesehen ist, Daten in Bezug auf das oder die erfassten Objekte bereitzustellen, umfassend mindestens die folgende Abfolge von aufeinanderfolgenden Schritten, die iterativ durchgeführt werden, wobei jede Iteration dem Empfang neuer Daten entspricht, die von dem Radar (3) bereitgestellt werden:
- einen Empfangsschritt (E1), der von einer Empfangseinheit (4) durchgeführt wird, um Daten zu empfangen, die mindestens Spuren, die Abschnitte von Bewegungsbahnen der von dem Radar (3) erfassten Objekte kennzeichnen, und eine erste Klassifizierung für die Spuren umfassen, wobei eine Klassifizierung Wahrscheinlichkeiten für jede der Spuren und für jede der Klassen aus einer Liste von vorbestimmten Klassen umfasst, dass eine Spur einer Klasse angehört;
- einen Datenverarbeitungsschritt (E2), der von einem Rechner (5) durchgeführt wird, um die im Empfangsschritt (E1) empfangenen Daten zu filtern, durch Löschen der Daten, die doppelten Spuren entsprechen und/oder Spuren entsprechen, die derart beschädigt sind, dass eine einzige Spur jedem der von dem Radar (3) erfassten Objekte zugeordnet ist;
einen ersten Berechnungsschritt (E3), der von dem Rechner (5) durchgeführt wird, um ausgehend von den gefilterten Daten kinematische Kenndaten in Bezug auf jede der Spuren zu berechnen;
einen zweiten Berechnungsschritt (E4), der von dem Rechner (5) durchgeführt wird, um statistische Elemente zu berechnen, die statistische Verteilungen der kinematischen Kenndaten in Bezug auf jede der Spuren darstellen;
einen Klassifizierungsschritt (E5), der von dem Rechner (5) durchgeführt wird, der mindestens die folgenden Teilschritte umfasst, die gleichzeitig und für jede der Spuren durchgeführt werden:
- einen ersten Teilschritt (E51) der Klassifizierung unter Verwendung eines statistischen Algorithmus, um eine zweite Klassifizierung ausgehend von den statistischen Elementen zu bestimmen, wobei der statistische Algorithmus auf statistischen Referenzverteilungen basiert, die vorab in einer Datenbank gespeichert wurden;
- einen zweiten Teilschritt (E52) der Klassifizierung, der einen Erkennungsalgorithmus verwendet, um eine dritte Klassifizierung zu bestimmen, wobei der Erkennungsalgorithmus vorab durch automatisches Lernen trainiert wurde, um Spuren zu erkennen, die vorbestimmten Klassen entsprechen;
- einen Schritt (E6) der endgültigen Klassifizierung, der von dem Rechner (5) durchgeführt wird, um eine endgültige Klassifizierung für jede der Spuren ausgehend von der ersten Klassifizierung, der zweiten Klassifizierung und der dritten Klassifizierung zu bestimmen und um jeder der Spuren eine endgültige Klasse zuzuweisen, die gemäß ihrer endgültigen Klassifizierung der wahrscheinlichsten Klasse für die betrachtete Spur entspricht; und
- einen Schritt (E7) der Übertragung, der von einer Übertragungseinheit (6) durchgeführt wird, um einem Benutzersystem (7) mindestens jede der Spuren und die endgültige Klasse, die ihr zugewiesen ist, zu übertragen, wobei die einer Spur zugewiesene endgültige Klasse der Klasse entspricht, die für das dieser Spur zugeordnete Objekt bestimmt wurde.

2. Verfahren nach Anspruch 1,
**dadurch gekennzeichnet, dass** der Schritt (E6) der endgültigen Klassifizierung die folgende Abfolge von aufeinanderfolgenden Teilschritten umfasst, die für jede der Spuren iterativ durchgeführt werden, bis jeder der Spuren eine endgültige Klasse zugewiesen ist:
- einen Teilschritt (E61) der Bestimmung, um ausgehend von der ersten Klassifizierung, der zweiten Klassifizierung und der dritten Klassifizierung die Wahrscheinlichkeit zu bestimmen, dass die betrachtete Spur einer Klasse aus den vorbestimmten Klassen angehört;
- einen Teilschritt (E62) des Vergleichs, um die Wahrscheinlichkeit, dass die betrachtete Spur der betrachteten Klasse angehört, mit einem vorbestimmten Schwellenwert zu vergleichen; und
- einen Teilschritt (E63) der Validierung zum:
- Zuweisen der betrachteten Klasse als endgültige Klasse zu der betrachteten Spur, wenn die Wahrscheinlichkeit, dass die betrachtete Spur der betrachteten Klasse angehört, größer oder gleich dem Schwellenwert ist; und
- andernfalls, Übergehen zu einer anderen vorbestimmten Klasse aus der Liste der vorbestimmten Klassen.

3. Verfahren nach einem der Ansprüche 1 und 2,
**dadurch gekennzeichnet, dass** die Wahrscheinlichkeit, dass eine Spur einer Klasse aus den vorbestimmten Klassen angehört, durch Verwenden der folgenden Formel bestimmt wird: ${P}_{f} = \frac{{w}_{1} . {P}_{1} + {w}_{2} . {P}_{2} + {w}_{3} . {P}_{3}}{{w}_{1} + {w}_{2} + {w}_{3}}$
wobei:
- *P_{f}* die Wahrscheinlichkeit ist, dass eine Spur der betrachteten Klasse angehört;
- *w*₁ ein der ersten Klassifizierung zugeordneter Gewichtungsfaktor ist;
- *P*₁ die Wahrscheinlichkeit ist, dass eine Spur gemäß der ersten Klassifizierung der betrachteten Klasse angehört;
- *w*₂ ein der zweiten Klassifizierung zugeordneter Gewichtungsfaktor ist;
- *P*₂ die Wahrscheinlichkeit ist, dass eine Spur gemäß der zweiten Klassifizierung der betrachteten Klasse angehört;
- *w*₃ ein der dritten Klassifizierung zugeordneter Gewichtungsfaktor ist;
- *P*₃ die Wahrscheinlichkeit ist, dass eine Spur gemäß der dritten Klassifizierung der betrachteten Klasse angehört.

4. Verfahren nach einem der vorstehenden Ansprüche,
**dadurch gekennzeichnet, dass** die erste Klassifizierung, die zweite Klassifizierung, die dritte Klassifizierung und die endgültige Klassifizierung einer Spur die Wahrscheinlichkeiten umfassen, dass das der Spur zugeordnete Objekt jeder der folgenden vorbestimmten Klassen angehört: einer "Drohnen"-Klasse, einer "Hubschrauber"-Klasse, einer "Leichtflugzeug"-Klasse, einer "Kampfflugzeug"-Klasse, einer "Raketen"-Klasse, einer "Linienflugzeug"-Klasse.

5. Verfahren nach einem der vorstehenden Ansprüche,
**dadurch gekennzeichnet, dass** bei jeder Iteration am Ende des Schritts (E6) der endgültigen Klassifizierung die jeder der Spuren zugewiesenen endgültigen Klassen in einem Speicher (9) gespeichert werden, wenn die endgültige Klasse einer im Speicher (9) gespeicherten Spur während einer vorbestimmten Anzahl aufeinanderfolgender Iterationen unverändert bleibt, dann wird die endgültige Klasse dieser Spur im Speicher (9) festgeschrieben und bei den nachfolgenden Iterationen wird keine neue Klassifizierung für diese Spur bestimmt.

6. Verfahren nach einem der vorstehenden Ansprüche,
**dadurch gekennzeichnet, dass** es einen vorläufigen Schritt (E0), der von einer Recheneinheit (11) vor dem Empfangsschritt (E1) durchgeführt wird, umfasst, um die von dem Radar (3) in einem vorbestimmten Zeitraum bereitgestellten Daten in Form von Datenpaketen zu bündeln und um die Datenpakete im Empfangsschritt (E1) zu übertragen.

7. Verfahren nach einem der vorstehenden Ansprüche,
**dadurch gekennzeichnet, dass** die im ersten Berechnungsschritt (E3) berechneten kinematischen Kenndaten mindestens die folgenden Kenndaten umfassen: eine vertikale Beschleunigung, eine Beschleunigung am Boden, eine radaräquivalente Fläche, eine Geschwindigkeit am Boden, eine Höhe, Standardabweichungen bezüglich der Position, Standardabweichungen bezüglich der Geschwindigkeit

8. Verfahren nach einem der vorstehenden Ansprüche,
**dadurch gekennzeichnet, dass** im zweiten Berechnungsschritt (E4) die statistischen Elemente über zwei unterschiedliche Zeitfenster berechnet werden, wobei ein erstes Zeitfenster eine erste, als kurzfristig bezeichnete Dauer darstellt und ein zweites Zeitfenster eine zweite, als langfristig bezeichnete Dauer darstellt, wobei die kurzfristige Dauer kürzer ist als die langfristige Dauer.

9. Verfahren nach einem der vorstehenden Ansprüche,
**dadurch gekennzeichnet, dass** die im zweiten Berechnungsschritt (E4) berechneten statistischen Elemente mindestens die folgenden Elemente in Bezug auf mindestens eine der kinematischen Kenndaten umfassen: Mindestwerte, Höchstwerte, Durchschnitte, Medianwerte, Standardabweichungen, Asymmetrien, Wölbungskoeffizienten, Interquartilabstände.

10. Klassifizierungsvorrichtung zum Bestimmen einer Klasse für mindestens ein von einem Radar (3) erfasstes Objekt, der dazu vorgesehen ist, Daten in Bezug auf das oder die erfassten Objekte bereitzustellen,
wobei die Vorrichtung mindestens Folgendes umfasst:
- eine Empfangseinheit (4), die konfiguriert ist, um Daten zu empfangen, die mindestens Spuren, die Abschnitte von Bewegungsbahnen der von dem Radar (3) erfassten Objekte kennzeichnen, und eine von dem Radar (3) bestimmte erste Klassifizierung für jede der Spuren umfassen, wobei eine Klassifizierung Wahrscheinlichkeiten für jede der Spuren und für jede der Klassen aus einer Liste von vorbestimmten Klassen umfasst, dass eine Spur einer Klasse angehört;
- einen Rechner (5), der konfiguriert ist zum:
- Filtern der von der Empfangseinheit (4) empfangenen Daten, durch Löschen der Daten, die doppelten Spuren entsprechen oder Spuren entsprechen, die derart beschädigt sind, dass eine einzige Spur jedem der Objekte zugeordnet ist;
- Berechnen, ausgehend von den gefilterten Daten, der kinematischen Kenndaten jeder der Spuren;
- Berechnen statistischer Elemente, die die statistische Verteilung der kinematischen Kenndaten in Bezug auf jede der Spuren darstellen;
- Bestimmen einer zweiten Klassifizierung ausgehend von den statistischen Elementen durch Verwenden eines statistischen Algorithmus, der auf statistischen Bezugsverteilungen basiert, die vorab in einer Datenbank gespeichert wurden;
- Bestimmen einer dritten Klassifizierung durch Verwenden eines vorab durch automatisches Lernen trainierten Erkennungsalgorithmus, um Spuren zu erkennen, die vorbestimmten Klassen entsprechen; und
- Bestimmen einer endgültigen Klassifizierung für jede der Spuren ausgehend von der ersten Klassifizierung, der zweiten Klassifizierung und der dritten Klassifizierung; und
- Zuweisen, jeder der Spuren, einer endgültigen Klasse, die gemäß ihrer endgültigen Klassifizierung der wahrscheinlichsten Klasse für die betrachtete Spur entspricht, und
- eine Übertragungseinheit (6), die konfiguriert ist, um einem Benutzersystem (7) mindestens jede der Spuren und die Klasse, die ihr zugewiesen ist, zu übertragen, wobei die einer Spur zugewiesene endgültige Klasse der Klasse entspricht, die für das dieser Spur zugeordnete Objekt bestimmt wurde.

11. Vorrichtung nach Anspruch 10,
**dadurch gekennzeichnet, dass** sie eine Recheneinheit (11) umfasst, die konfiguriert ist, um die von dem Radar (3) in einem vorbestimmten Zeitraum bereitgestellten Daten in Form von Datenpaketen zu bündeln und um die Datenpakete an die Empfangseinheit (4) zu übertragen.

## Claims

1. A classification method implemented by a classification device (1) for determining a class for at least one object detected by a radar (3) configured to provide data relating to said object or objects detected, comprising at least the following sequence of successive steps implemented in an iterative manner, each iteration corresponding to the reception of new data provided by the radar (3):
- a receiving step (E1), implemented by a receiving unit (4), for receiving data comprising at least tracks characterizing portions of trajectories of the objects detected by the radar (3) and a first classification for said tracks, a classification comprising probabilities that a track belongs to a class for each of the tracks and for each of the classes from a list of predetermined classes;
- a data processing step (E2), implemented by a computer (5), for filtering the data received in the receiving step (E1) by removing the data corresponding to duplicate tracks and/or corrupted tracks so that only one track is associated with each of the objects detected by the radar (3);
- a first calculating step (E3), implemented by the computer (5), for calculating, from the filtered data, kinematic characteristics relative to each of the tracks;
- a second calculating step (E4), implemented by the computer (5), for calculating statistical elements representing statistical distributions of the kinematic characteristics relative to each of the tracks;
- a classifying step (E5), implemented by the computer (5), comprising at least the following sub-steps implemented simultaneously and for each of the tracks:
∘ a first classifying sub-step (E51) using a statistical algorithm for determining a second classification from the statistical elements, said statistical algorithm being based on reference statistical distributions previously recorded in a database;
∘ a second classifying sub-step (E52) using a recognition algorithm for determining a third classification, said recognition algorithm being previously trained by machine learning to recognize tracks corresponding to predetermined classes;
- a final classifying step (E6), implemented by the computer (5), for determining a final classification for each of the tracks from the first classification, the second classification and the third classification and to assign to each of the tracks a final class corresponding to the most likely class for the track under consideration according to its final classification; and
- a transmitting step (E7), implemented by a transmitting unit (6), for transmitting to a user system (7) at least each of the tracks and the final class assigned thereto, the final class assigned to a track corresponding to the class determined for the object associated with that track.

2. The method according to claim 1,
**characterized in that** the final classifying step (E6) comprises the following sequence of successive sub-steps implemented iteratively for each of the tracks until a final class is assigned to each of the tracks:
- a determination sub-step (E61) for determining the probability that the track under consideration belongs to a class among the predetermined classes from the first classification, the second classification and the third classification;
- a comparison sub-step (E62) for comparing the probability that the track under consideration belongs to said class under consideration to a predetermined threshold value; and
- a validation sub-step (E63) for:
∘ assigning the class under consideration as the final class to the track under consideration if the probability that said track under consideration belongs to said class under consideration is greater than or equal to the threshold value; and
∘ otherwise, moving to another predetermined class from the list of predetermined classes.

3. The method according to any one of claims 1 and 2,
**characterized in that** the probability that a track belongs to a class among the predetermined classes is determined using the following formula: ${P}_{f} = \frac{{w}_{1} . {P}_{1} + {w}_{2} . {P}_{2} + {w}_{3} . {P}_{3}}{{w}_{1} + {w}_{2} + {w}_{3}}$
wherein:
- *P_{f}* is the probability that a track belongs to the class under consideration;
- *w*₁ is a weighting factor associated with the first classification;
- *P*₁ is the probability that a track belongs to the class under consideration according to the first classification;
- *w*₂ is a weighting factor associated with the second classification;
- *P*₂ is the probability that a track belongs to the class under consideration according to the second classification;
- *w*₃ is a weighting factor associated with the third classification;
- *P*₃ is the probability that a track belongs to the class under consideration according to the third classification.

4. The method according to any one of the preceding claims,
**characterized in that** the first classification, the second classification, the third classification and the final classification of a track comprise the probabilities that the object associated with said track belongs to each of the following predetermined classes: a "drone" class, a "helicopter" class, a "light aircraft" class, a "combat aircraft" class, a "missile" class, an "airliner" class.

5. The method according to any one of the preceding claims,
**characterized in that** at each iteration, at the end of the final classifying step (E6), the final classes assigned to each of the tracks are recorded in a memory (9), if the final class of a track recorded in the memory (9) remains unchanged for a predetermined number of consecutive iterations, then the final class of that track is frozen in the memory (9) and no new classification is determined for this track in the subsequent iterations.

6. The method according to any one of the preceding claims,
**characterized in that** it comprises a preliminary step (E0), implemented by a computing unit (11) before the receiving step (E1), for aggregating the data provided by the radar (3) for a predetermined period of time in the form of data packets and for transmitting said data packets at the receiving step (E1).

7. The method according to any one of the preceding claims,
**characterized in that** the kinematic characteristics calculated in the first step (E3) of calculation comprise at least the following characteristics: vertical acceleration, ground acceleration, radar equivalent area, ground speed, altitude, standard deviations on position, standard deviations on speed.

8. The method according to any one of the preceding claims,
**characterized in that** in the second step (E4) of calculation, the statistical elements are calculated over two distinct time windows, a first time window with a first duration referred to as short-term duration, and a second time window with a second duration referred to as long-term duration, said short-term duration being smaller than the long-term duration.

9. The method according to any one of the preceding claims,
**characterized in that** the statistical elements calculated in the second step (E4) of calculation comprise at least the following elements relating to at least one of the kinematic characteristics: minimum values, maximum values, means, medians, standard deviations, asymmetries, flattening coefficients, interquartile deviations.

10. A classification device for determining a class for at least one object detected by a radar (3) configured to provide data relating to said detected object or objects,
said device comprising at least:
- a receiving unit (4) configured to receive data comprising at least tracks characterizing portions of trajectories of the objects detected by the radar (3) and a first classification determined by the radar (3) for each of the tracks, a classification comprising probabilities that a track belongs to a class for each of the tracks and for each of the classes from a list of predetermined classes;
- a computer (5) configured for:
∘ filtering the data received by the receiving unit (4) by removing the data corresponding to duplicate tracks or corrupted tracks so that only one track is associated with each of the objects;
∘ calculating, from the filtered data, kinematic characteristics of each of the tracks;
∘ calculating statistical elements representing the distribution of kinematic characteristics relative to each of the tracks;
∘ determining a second classification from the statistical elements using a statistical algorithm based on reference statistical distributions previously recorded in a database;
∘ determining a third classification by using a recognition algorithm previously trained by machine learning to recognize tracks corresponding to predetermined classes; and
∘ determining a final classification for each of the tracks from the first classification, the second classification and the third classification; and
∘ assigning each of the tracks a final class corresponding to the most likely class for the track under consideration according to its final classification, and
- a transmitting unit (6) configured to transmit to a user system (7) at least each of the tracks and the class assigned to it, the final class assigned to a track corresponding to the class determined for the object associated with that track.

11. The device according to claim 10,
**characterized in that** it comprises a computing unit (11) configured to aggregate the data provided by the radar (3) for a predetermined period of time in the form of data packets and to transmit said data packets to the receiving unit (4).
